# EUROPEAN PATENT SPECIFICATION

(11) **EP 3 018 410 B1**
(45) Date of publication and mention of the grant of the patent: **17.05.2017**
(21) Application number: 15193885.9
(22) Date of filing: 10.11.2015
(51) Int. Cl.: F23G 7/06, B01D 53/72

(54) **PLANT AND METHOD FOR REDUCING BITUMEN FUMES**
ANLAGE UND VERFAHREN ZUR REDUZIERUNG VON BITUMENDÄMPFEN
INSTALLATION ET PROCÉDÉ POUR RÉDUIRE DES FUMÉES DE BITUME

(30) Priority: 10.11.2014 IT MI20141937
(43) Date of publication of application: 11.05.2016
(73) Proprietor: Valli Zabban S.p.A., 50019 Sesto Fiorentino (FI) (IT)
(72) Inventor: OLMI, Eugenio, I-59100 PRATO (IT)
(74) Representative: Spadaro, Marco

(56) References cited:
- WO-A1-00/32988
- CN-A- 101 149 151
- CN-A- 102 798 128
- CN-U- 202 973 119
- CN-U- 203 862 081
- CN-Y- 2 711 548
- JP-A- 2000 205 534
- US-A- 4 879 959
- US-A- 4 969 406
- US-A1- 2011 269 081
- US-A1- 2012 125 759

## Description

The present invention relates to the field of chemical plants, in particular the field of processing plant refluxes, more specifically a system and a plant for the combustion of bitumen fumes.

### Background of the invention

Bitumen is a product which is derived from the distillation or refinement of crude oil.

The bitumen is stored at suitable temperatures (from 130° to 180°C) for maintaining the fluidity characteristics thereof which allow the transport and processing thereof until final use.

The storage and processing temperatures bring about the development of noxious fumes and it is thereby necessary to provide for systems for reducing the pollutants, and, in the event that there is not a total reduction, for converting them into simple molecules which are typical of combustion.

Plants for producing, processing and charging bitumen have great problems involving the environmental impact. The increasingly severe standards for environmental protection impose a strict control on the level of pollutants of the fumes emitted by the plant.

One of the methods of processing the bitumen fumes is the combustion thereof, emitting the bitumen fumes from the production or conservation or processing plant into a boiler and burning them.

The problem which is encountered is the efficiency of the burner which has to produce the conditions suitable for reducing the pollutants.

The national standards on the control of the pollutants are not generally homogeneous and a system of reducing the pollutants is not always suitable for use in different countries.

Particular attention is given to nitrogen oxides, which are considered to be among the most harmful atmospheric pollutants and among the most difficult to reduce. In any case, there should also not be overlooked the other pollutants, for example, sulphur oxides, hydrogen sulphide, hydrocyanic acid, volatile hydrocarbons, in particular the aromatics and, not least, the particularly unpleasant odour which is produced by the production and processing of bitumen.

Therefore, it is felt to be necessary to provide for a system and a plant which is capable of reducing in an efficient manner the pollutants of the bitumen fumes.

The utility model CN202087199 describes a device for cleaning bitumen, which comprises a pre-reactor with a powder chamber. The fumes are conveyed via a system which is provided with a Venturi tube in admixture with powders which act as scrubbers.

US1281597 describes a method and a plant for extracting and recovering gaseous constituents which are based on absorption/desorption.
WO2010059802 relates to the problem of reducing the pollutants. The system described herein provides for a turbine downstream of the burner in a partially closed system, wherein the turbine is used as an energy generator. The burner is cited as being generic, without any specific construction arrangement. US20130118076 describes an operation for processing refuse by means of a specific system of "chemical looping combustion".
CA2750129 describes an operation for processing refuse by means of a plant which provides for a specific rotating kiln. This reactor is specifically indicated for cracking.
There are known burner systems which provide for a system of air admission with a toroidal device. FR2495285 relates to gas turbine motors and describes an air admission system with variable surfaces. GB2231400 describes domestic burners in which there are provided toroidal ventilators which are positioned at the outlet from the combustion chamber.
WO97/48948 addresses the problem of the discharge of atmospheric pollutants, in particular NOx. The proposed solution involves a burner RFSC (Radially Stratified Flame Core Burner) with control of the flame, in particular the angular momentum thereof. CN203862081 U describes a bitumen flue gas treatment system comprising filters, a combustion boiler and a desulfurizer.

CN202973119U describes an incineration system for asphalt smokes. There are known other systems for attempting to reduce the pollutants from bitumen fumes. These include scrubbers, which have so far produced poor results; the addition of fragrances to the bitumen, with results which are generally unsatisfactory; filtering by reducing the vapours, which involves complications in the plant and further does not comply with the legal prerequisites. Another known system is the modification of the combustion chamber, for example, by adding a post-burner. The solution of the post-burner constitutes a great burden on the construction costs of the plant and a substantial increase in the costs of the fuel.
Bitumen is a product which is characterized by a high level of non-homogeneity of the fractions, and one of the most difficult problems to solve involves the presence of hydrogen sulphide (H₂S).
It is further necessary to provide for a system of reducing the pollutants of the bitumen fumes which is efficient and complies with the standard prerequisites relating to environmental emissions.
It has now been found that the problems set out above are solved by configuring the plant for processing the bitumen in such a manner that the fumes become a portion of the supply for the boiler for the combustion thereof.

### Statement of invention

The present invention relates to a plant for reducing bitumen fumes as defined in claim 1. Embodiments of the present invention are further defined in the dependent claims.

The present invention further relates to a method for reducing bitumen fumes as defined in the relevant independent claim.

Those objects and other objects of the present invention, which are defined in the claims, will be set out in detail in the following description and with reference to embodiments and Figures.

In the Figures:
Figure 1 is a schematic view of an embodiment of the present invention in the (simplified) form of a plant for the storage and processing of bitumen.
Figure 2 is a schematic view of an unclaimed embodiment which shows the boiler provided with the toroidal system.
Figure 3 is a schematic view of another embodiment of the present invention.

### Detailed description of the invention

The present invention first relates to a plant for reducing the bitumen fumes comprising:
a). an intake system for drawing in the bitumen fumes and mixing those fumes with external air (ambient air) to produce an admixture of external air/bitumen fumes;
b). a system for introducing this admixture into a boiler as a primary supply (primary air) so as to maintain the admixture in the boiler for at least two seconds;
c). a sensor which is for measuring oxygen and/or carbon monoxide and which is positioned in the discharge chimney of the burnt materials and which is capable of adjusting the proportion between the external air and the bitumen fumes in the admixture.
The main advantage of the present invention is the reduction of the pollutants in the fumes discharged from the chimney of the installation to a level below the levels imposed by the standard.
Another substantial advantage is to allow processing of bitumen fumes from bitumens which have a content of hydrocarbons less than the self-supporting limits of the flame of the boiler. This allows the boiler to be maintained under optimum operating conditions for processing the bitumen fumes even when the plant stores and/or processes bitumen having a low content of hydrocarbons, or when the plant operates at low speeds or is shut down and the bitumen fumes originate only from storage. In a preferred embodiment of the invention, the boiler is the boiler which provides for heating of the diathermic fluid, in particular oil, which maintains the bitumen in the advantageous fluid state in the storage tanks and in the system for circulating the bitumen in the plant, for example, tubes and systems for moving the bitumen (such as pumps, etcetera).
In another embodiment of the invention, the boiler is provided with a toroidal air supply system which is positioned outside the combustion chamber and is in direct communication therewith in an axial relationship with the flame. According to that embodiment of the invention, the toroidal system conveys into the combustion chamber of the boiler primary and/or secondary supply air, wherein the primary supply is constituted by the admixture obtained at step a) and the secondary air is constituted by external air, or by the admixture obtained at step a). It is also possible to supply the boiler via the burner and the toroid with the admixture of step a).
In a preferred embodiment of the invention, the sensor c) is positioned in the intake chimney of the burnt materials. The optimum combustion process provides for fixed relationships between the fuels and comburents. In order to maintain the optimum relationship during the period of 24 hours, the sensor installed in the chimney detects the quantity of oxygen or CO, controls and regulates the flow of air or fuel to the burner.
In another preferred embodiment of the invention, there is provided in the plant a filtering system for the bitumen fumes before they are mixed with external air. Even more preferably, the filtering system comprises one or more coagulation filters.
In another preferred embodiment of the invention, the intake system a) comprises one or more ventilators or aspirators with a high head, typically 630 mm H₂O. The object of the ventilator/aspirator is to urge the fumes which are cooled into the boiler, where the combustion process takes place.
Advantageously, the external air has a temperature between +5°C and +40°C.
It is particularly preferable for the mixed fumes to be maintained at a temperature below 135°C.
The intake system takes the bitumen fumes directly from the bitumen storage tanks, either as a raw material or as a semi-processed material, and/or from processing locations of the raw material, and/or from the storage tanks of the finished product (B11, B40-B43).

The present invention also relates to a method for reducing bitumen fumes comprising:
a). mixing the bitumen fumes with external air (ambient air) to produce an admixture of external air/bitumen fumes;
b). introducing that admixture into a boiler as a primary supply (primary air), or as secondary air, or as primary and secondary air;
c). maintaining this admixture in the boiler for at least two seconds to produce burnt materials of this admixture;
d). measuring the content of oxygen and/or carbon monoxide in the burnt materials;
e). establishing the proportion between the bitumen fumes and the external air in accordance with the content of oxygen and/or carbon monoxide in the burnt materials;
f). controlling the proportion e) so as to maintain the optimum relationship between the fuel and comburent in the boiler.

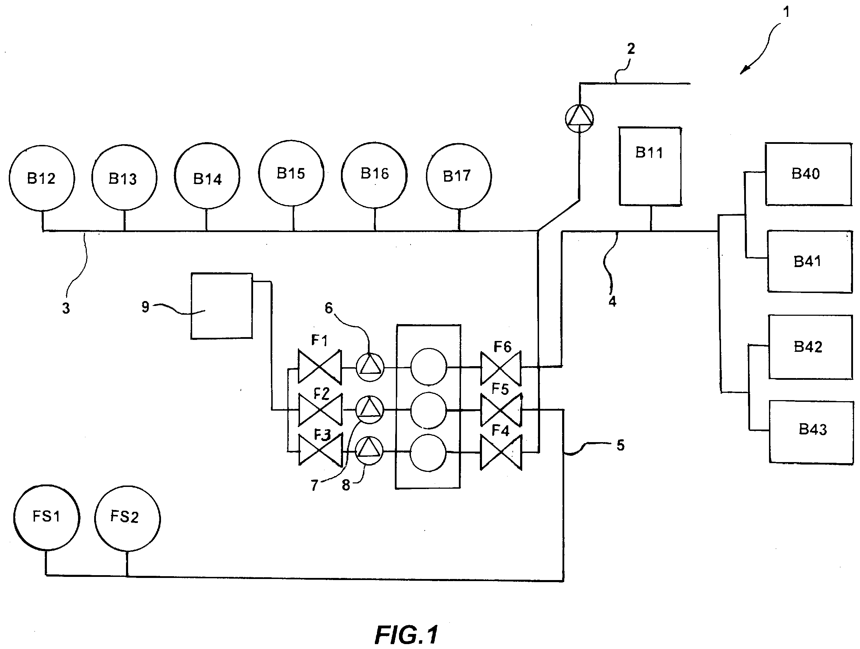

With reference to the exemplary embodiment shown in Figure 1, a plant for the processing and storage of bitumen (1) comprises one or more storage tanks for raw material or semi-processed material (B12-B17), one or more processing locations of the raw material, which are shown here by way of example with smelters (FS1, FS2), one or more storage tanks for the finished product (B11, B40-B43).

The storage tanks and processing locations are advantageously connected to material transfer means, which are generally conventional (not shown in Figure 1) and which do not require any specific description, being well known in the field of the invention. Merely by way of example, there are included tubes, pumps, valves, interception and control means for the flows, charging and discharging means.

The storage tanks and the processing locations are also generally conventional and constructed in accordance with usual techniques.

The plant (1) also comprises one or more charging and discharging locations for the raw material and the finished product in suitable transport means, usually tankers. Those locations are known as a "motorized loading jib". Figure 1 shows a motorized loading jib (2).

According to the present invention, the elements included in the exemplary plant (1), that is to say, the tanks (B12-B13), (B11, B40-B43), the smelters (FS1, FS2) are connected to a dedicated intake line, in particular, with reference to Figure 1, the storage tanks (B12-B17) to a first intake line (3), the storage tanks (B11-B40-B43) to a second intake line (4), and the smelters (FS1, FS2) to a third intake line (5). The charging and discharging locations, in Figure 1 there is illustrated by way of example a loading jib (2), are connected to one or more of the intake lines. For example, in Figure 1, the loading jib (2) is connected to the intake line (3).

Each intake line is connected to a filtering system, which is shown in Figure 1 with the reference numerals (F4, F5, F6). The filtering system may advantageously comprise a system of prefilters in order to safeguard the true filters.

The filtering system is a portion of a bitumen vapour condensing system and optionally comprises another filtering system (F1, F2, F3).
Downstream of the filtering system (F4, F5, F6) there are positioned ventilators (6,7,8), one for each filtering system. Downstream of the ventilators there may be positioned an optional additional filtering system (F1, F2, F3).
The ventilators, or in the alternative aspirators, (6,7,8) have the basic function of introducing external air (ambient air) into the intake line(s) (3,4,5) and producing the above-mentioned admixture with the bitumen fumes.
The ventilators, or aspirators, will advantageously have dimensions in accordance with the plant and the quantity of bitumen fumes to be processed. In the exemplary case of Figure 1, the ventilator/aspirator advantageously has a flow of at least 7 m/s. The minimum flow of the ventilator/aspirator must be such that the dispersion of fumes into the external environment under specific conditions is prevented, for example, in the presence of wind.
The filtering system is selected from those which are suitable for processing bitumen fumes. In a preferred embodiment of the invention, there are used glass fibre plugs. This type of plug is generally conventional and commercially available, for example, as supplied by the company Koch-Glist, model Flexifiber®, Type BD. Advantageously, each filter may provide for a double plug. This installation method allows the lines to be preserved from the presence of vapours of bitumen so as to maintain the gaseous flow purged of the aerosols which are produced at the head of the storage tanks.
The boiler (9) is of conventional type and may be supplied with any type of fuel. In a preferred embodiment of the invention, the fuel is fuel oil (low sulphur content) or methane. Preferably, the relationship between the fuel oil and primary air which is constituted by this admixture of bitumen fumes and external air is 1:13 kg/m³.
The bitumen fumes which reach the boiler (9) preferably have a temperature less than 130°C.
An example of a commercial boiler (9) is the model OEB 2000, of the company Menestrina srl.

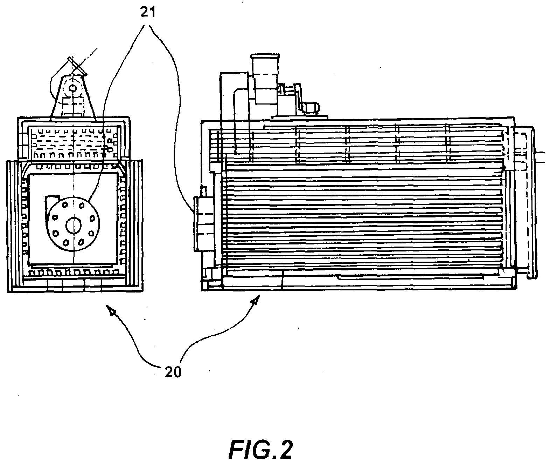

In another embodiment, which is not claimed, the boiler (9) is provided with a toroidal air supply system which is positioned outside the combustion chamber and in direct communication therewith in an axial relationship with the flame.
That embodiment is shown schematically in Figure 2, which shows the boiler (20) in a plan view from the front and side with the toroidal system (21) being mounted and positioned outside the combustion chamber.

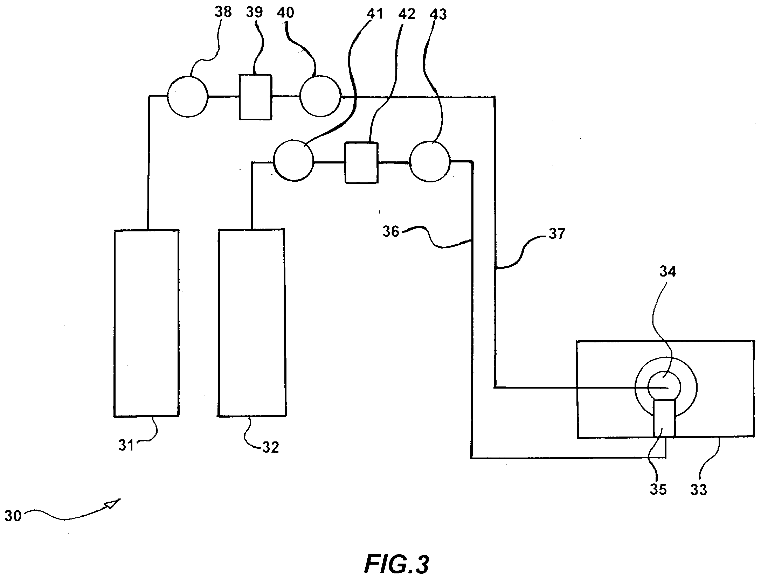

Figure 3 schematically shows another embodiment of the invention.

According to this embodiment, in a plant for the storage and processing of the bitumen (30), a first tank and/or processing location (31) is connected by means of a line (37) to the inlet of the primary air (34) of a boiler (33). The line (37) is provided with a filtering system (39) and with a ventilator/aspirator (40). There may optionally be provided a second ventilator/aspirator (38) upstream of the filtering system. A second tank and/or processing location (32) is connected by means of a line (36) to the inlet of the secondary air (35) of a toroidal supply system (35) of the boiler (33). The line (36) is provided with a filtering system (42) and with a ventilator/aspirator (43). There may optionally be provided a second ventilator/aspirator (41) upstream of the filtering system. All the components of the plant (30): lines (36, 37), ventilators/aspirators (38, 40, 41, 43), filtering systems (39, 42) are similar to those described above for the exemplary construction of Figure 1. In this embodiment of the invention, in Figure 3 the tanks/processing locations (31, 32) may also represent a multiplicity of tanks/processing locations.

That embodiment has the advantage of being able to independently control the lines which lead to the supply of the boiler both as primary air and as secondary air.

According to the present invention, in fact, the primary air or the secondary air in the boiler can be introduced independently via the toroid.

The primary air is supplied in a coaxial manner with respect to the flame of the burner, while the air is supplied from the toroid in a tangential manner with respect to the introduction of the primary air. The air introduced from the toroid produces a vortex about the flame.

It is important to observe that all the supply air of the boiler is from the storage and processing plant for the bitumen, also taking into account the portion of external air which is mixed with the bitumen fumes before the introduction into the boiler.

As set out above, the "dirty" supply air is from the storage tanks for the bitumen and is advantageously divided between primary air and secondary air. That division is established by the operator of the plant, with the single constraint of maintaining the relationship of fuel oil: air equal to approximately 1:13 kg/m³. The subdivision between primary air and secondary air is also determined in accordance with the condition of the filters and any pre-filters present F1-F6 (see Figure 1).

The toroidal system must ensure a minimum passage of air of approximately 1,000 m³.

The toroidal system according to the present invention can be connected to different types of boilers which are commercially available.

In one embodiment, the toroidal system is connected to a standard boiler of the type OEB2000 of the company Mestrina, supplied with fuel oil (low sulphur content). The capacity of the boiler is from a minimum of approximately 88.5 kg/h to a maximum of approximately 264 kg/h. The power at the furnace is between 1 MW and 2.91 MW. The real flow of air is between approximately 1,200 Nm³/h and 3,650 Nm³/h. The burner is coaxial with respect to the fume introduction chamber. The throughput time of the burnt gases is up to 2 seconds at maximum capacity. The temperature of the flame is between 800°C and 1,400°C. The mean temperature of the chamber is between 600°C and 900°C.

The combustion efficiency (thermal efficiency) is at least 84-85%.

The maximum and minimum conditions of combustion capacity of the boiler are in accordance with the operating conditions of the intake system, active and non-active production conditions, forming the basis of the production cycle of the installation.

The following Table sets out an exemplary embodiment of the operating parameters for a production plant such as the one set out in Figure 1 by way of example.

| Operating parameter | Plant non-active | Plant active |
|---|---|---|
| Power at the furnace | 1 MW | 2.91 MW |
| Max. real air flow | approximately 1,200 Nm³/h | approximately 3,650 Nm³/h |
| Flow primary air | approximately 240 Nm³/h | approximately 730 Nm³/h |
| Flow secondary air | approximately 960 Nm³/h | approximately 2,920 Nm³/h |

Advantageously, under conditions of low productivity or shutdown of the plant, the primary and secondary flows are advantageously reduced.

The efficiency of combustion is ensured by the above-mentioned relationship between the fuel and comburent of 1:13 (the oxygen present in the supply air) and by the efficient mixing of the fumes introduced into the combustion chamber and the tongue of combustion (flame).

All this is ensured in particular and in a preferred manner by the toroid which is connected to the boiler according to the teaching of the present invention. The geometry of the toroidal distributor is such that it ensures the vortex-like movement of the air about the flame and the action of a dynamic eddy which is brought about by the tongue of the flame allow the intimate mixing between the secondary air and the admixture of fuel/primary air, with resultant efficient participation of the bitumen fumes in the combustion process.

During the start phase of the boiler and for a correct balancing of the volumes of comburent (primary air and secondary air) and fuel, there was verified by experiment the line of the flow values of the primary air and secondary air in relation to the power stages of the burner. The operating line is defined at the start of the system by means of analysis of the combustion in real time. Subsequently, the line may be stored in the control system of the boiler, allowing the automatic operation thereof.

The products of the combustion are in accordance with the main reactions between the fuel and the air flow:

N₂(g) + O₂ (g) → 2NO₂(g)

NO(g) + ½O₂ (g) → NO₂(g)

C(g) + O₂ (g) → CO₂(g)

H₂(g) + ½O₂ (g) → H₂O(g)

The supply air of the boiler is from the processing plant of the bitumen ("dirty" air) and contains, inter alia, the following substances: volatile organic compounds, compounds of sulphur, hydrogen sulphide in various quantities and in accordance with the fraction of the bitumen, the storage and processing conditions of the bitumen. Typically, those pollutants are present at concentrations of ≤ 50 mg/Nm³, ≤ 1 mg/Nm³ and ≤ 5 mg/Nm³, respectively.

During the combustion process, those substances are converted into nitrogen oxides (NO, NO₂), carbon dioxide (CO₂), sulphur oxides (SOₓ) and water vapour. Those substances also have to be controlled in terms of the emission thereof given that they are included among polluting substances (nitrogen and sulphur oxides), greenhouse gases (carbon dioxide) and have to be within the limits imposed by the national standards for protecting the environment.

The correct combustion of the fumes inside the boiler is ensured by the temperature of the combustion chamber, by the dwell time of the fumes in the chamber for a sufficient time for complete oxidation. In an embodiment of the present invention, the temperature of the combustion chamber is between approximately 600°C and approximately 1,300°C, preferably between approximately 600°C and approximately 900°C for a minimum dwell time of the fumes of approximately 2 seconds.

Advantageously, the system according to the present invention allows greater efficiency of the thermal oxidation with respect to a conventional system of oxidation in the wet state with the scrubber for the fumes with a greater vapour charge.

There is provided below an example of how the system according to the present invention achieves results for a reduction of the pollutants so as to comply with environmental control standards.

The area of investigation was fixed to be a rectangle having dimensions of 300 m x 300 m, positioning the chimney E1/E2 at the coordinate location (X=150, Y=150), in order to evaluate the effects of the emissions falling within a radius of 150 m of the chimney and there was used a research grid which is constituted by cells having a side measuring 10 m.

The emissions have been considered in a precautionary manner to be continuous and present for 24 hours out of 24, for every day of the year, without therefore considering closures of the plant.

The "Short term" simulations were carried out taking into consideration all wind directions (360°).

### Main input data

| Description | u.m. | E1 (Scrubber) | E2 (present invention) |
|---|---|---|---|
| Coordinate X | X (m) | 150 | 150 |
| Coordinate Y | Y (m) | 150 | 150 |
| Height of chimney from (p.c.) | Z (m) | 9.5 | 10.0 |
| Diameter of the chimney | D (m) | 0.45 | 0.478 |
| Flow of the fumes | Nm³/h | 6.500 | 3.800 |
| Discharge temperature of fumes | T (K) | 300 | 465 |
| Emission speed | m/s | 12.0 | 10.0 |
| SOV (TOC) | mg/Nm³ | 40.3 | 40.3 |
| Weather data | | EPA Screening model | EPA Screening model |

The following table sets out the maximum concentrations expected on the ground for the parameters involved in accordance with the distance from the emission location.

| Distance from chimney | SOV (µg/m³)-E1 | SOV (µg/m³)-E2 |
|---|---|---|
| 0 | | |
| 10 | | |
| 20 | 4.82 | 0.36 |
| 30 | 14.80 | 2.88 |
| 40 | 19.60 | 4.76 |
| 50 | 23.10 | 5.29 |
| 60 | 23.40 | 5.65 |
| 70 | 24.10 | 5.63 |
| 80 | 23.40 | 5.32 |
| 90 | 22.40 | 5.44 |
| 100 | 23.00 | 5.40 |
| 110 | 22.70 | 5.20 |
| 120 | 22.00 | 5.11 |
| 130 | 20.90 | 5.12 |
| 140 | 19.70 | 5.04 |
| 150 | 18.50 | 4.89 |

It can be seen that the maximum concentration is approximately 60-70 m from the chimney and the pollutants are reduced by at least one order of magnitude using the system of the present invention.

According to another object of the present invention, there is also provided a method for reducing the bitumen fumes comprising the following steps:
a. mixing the bitumen fumes with external air (ambient air) to produce an admixture of external air/bitumen fumes;
b. introducing the admixture into a boiler as a primary supply (primary air), or as secondary air, or as primary air and secondary air;
c. maintaining the admixture in the boiler for at least two seconds to produce burnt materials of that admixture;
d. measuring the oxygen and/or carbon monoxide content in the burnt materials;
e. establishing the proportion between the bitumen fumes and the external air in accordance with the oxygen and/or carbon monoxide content in the burnt materials;
f. controlling the proportion e) so as to maintain the optimum relationship between the fuel and comburent in the boiler.

In greater detail, in step a) the mixing of the fumes with external air may be brought about according to the exemplary methods above, as may the steps b)-d). Given that the quantity of oxygen and/or carbon monoxide measured at step d), carried out, for example, with the sensor described above, is an index for the efficiency of combustion of the fumes and the reduction of the pollutants, this quantity serves to control the proportion between the bitumen fumes and the external air in the admixture of comburent which is introduced into the boiler, until the desired residue of hydrocarbons in the burnt materials is reached.

The method according to the present invention may be carried out in an automatic system for management and control of the plant.

## Claims

1. A plant (1) for reducing bitumen fumes comprising:
a). an intake system for drawing in the bitumen fumes and mixing those fumes with external air (ambient air) to produce an admixture of external air/bitumen fumes;
b). a system for introducing this admixture into a boiler (9) as a primary supply (primary air) so as to maintain the admixture in the boiler for at least two seconds;
c). a sensor which is for measuring oxygen and/or carbon monoxide and which is positioned in the discharge chimney of the burnt materials and which is capable of adjusting the proportion between the external air and the bitumen fumes in the admixture.

2. A plant according to claim 1, wherein the boiler is provided with a toroidal air supply system which is positioned outside the combustion chamber and in direct communication therewith in an axial relationship with the flame.

3. A plant according to claim 2, wherein the toroidal system conveys primary and/or secondary supply air into the combustion chamber of the boiler.

4. A plant according to claim 3, wherein the primary supply is constituted by the admixture obtained at step a) and the secondary air is constituted by external air, or by the admixture obtained at step a).

5. A plant according to any one of claims 1 to 4, wherein the sensor c) is positioned in the intake chimney of the burnt materials.

6. A plant according to any one of claims 1 to 5, wherein there is provided a filtering system for those bitumen fumes before they are mixed with external air.

7. A plant according to claim 6, wherein the filtering system comprises one or more coagulation filters.

8. A plant according to any one of claims 1 to 7, wherein the intake system a) comprises one or more ventilators or aspirators with a high head.

9. A method for reducing bitumen fumes comprising:
a). mixing the bitumen fumes with external air (ambient air) to produce an admixture of external air/bitumen fumes;
b). introducing that admixture into a boiler as a primary supply (primary air), or as secondary air, or as primary and secondary air;
c). maintaining this admixture in the boiler for at least two seconds to produce burnt materials of this admixture;
d). measuring the content of oxygen and/or carbon monoxide in the burnt materials;
e). establishing the proportion between the bitumen fumes and the external air in accordance with the content of oxygen and/or carbon monoxide in the burnt materials;
f). controlling the proportion e) so as to maintain the optimum relationship between the fuel and comburent in the boiler.

## Patentansprüche

1. Anlage (1) zum Reduzieren von Bitumendämpfen, umfassend:
a) ein Ansaugsystem zum Ansaugen der Bitumendämpfe und Mischen dieser Dämpfe mit Außenluft (Umgebungsluft), um ein Gemisch aus Außenluft/Bitumendämpfen zu erzeugen;
b) ein System zum Einleiten dieses Gemisches in einen Kessel (9) als Primärzufuhr (Primärluft), um so das Gemisch im Kessel für zumindest zwei Sekunden zu halten;
c) einen Sensor, der zum Messen von Sauerstoff und/oder Kohlenmonoxid vorgesehen ist und der im Abgabeschornstein der verbrannten Materialien positioniert ist und der die Proportion zwischen der Außenluft und den Bitumendämpfen im Gemisch einstellen kann.

2. Anlage gemäß Anspruch 1, wobei der Kessel mit einem toroidförmigen Luftzufuhrsystem versehen ist, das außerhalb der Verbrennungskammer positioniert und in direkter Verbindung damit in einem axialen Verhältnis mit der Flamme ist.

3. Anlage gemäß Anspruch 2, wobei das toroidförmige System eine primäre und/oder sekundäre Luftzufuhr in die Verbrennungskammer des Kessels leitet.

4. Anlage gemäß Anspruch 3, wobei die primäre Zufuhr durch das Gemisch, das im Schritt a) erhalten wird, gebildet wird und die Sekundärluft durch Außenluft oder durch das Gemisch, das beim Schritt a) erhalten wird, gebildet wird.

5. Anlage gemäß einem der Ansprüche 1 bis 4, wobei der Sensor c) im Ansaugschornstein der verbrannten Materialen positioniert ist.

6. Anlage gemäß einem der Ansprüche 1 bis 5, wobei ein Filtersystem für derartige Bitumendämpfe vorgesehen wird, bevor sie mit der Außenluft gemischt werden.

7. Anlage gemäß Anspruch 6, wobei das Filtersystem einen oder mehrere Koagulationsfilter aufweist.

8. Anlage gemäß einem der Ansprüche 1 bis 7, wobei das Ansaugsystem a) einen oder mehrere Ventilatoren oder Aspiratoren mit einem großen Kopf aufweist.

9. Verfahren zum Reduzieren von Bitumendämpfen, umfassend:
a) Mischen der Bitumendämpfe mit Außenluft (Umgebungsluft), um ein Gemisch von Außenluft/Bitumendämpfen zu erzeugen;
b) Einleiten dieses Gemisches in einen Kessel als Primärzufuhr (Primärluft) oder als Sekundärluft, oder als Primär- und Sekundärluft;
c) Halten dieses Gemisches im Kessel für zumindest zwei Sekunden, um verbrannte Materialen dieses Gemisches zu erzeugen;
d) Messen des Sauerstoffgehalts und/oder Kohlenmonoxidgehalts in den verbrannten Materialien;
e) Festlegen der Proportion zwischen den Bitumendämpfen und der Außenluft in Übereinstimmung mit dem Sauerstoffgehalt und/oder Kohlenmonoxidgehalt in den verbrannten Materialien;
f) Steuern der Proportion von e), um so das optimale Verhältnis zwischen dem Kraftstoff und einer Verbrennungsluft im Kessel aufrechtzuerhalten.

## Revendications

1. Installation (1) pour réduire les fumées de bitume comprenant :
a). un système d'admission pour aspirer les fumées de bitume et mélanger ces fumées à de l'air externe (air ambiant) afin de produire un mélange d'air externe/fumées de bitume ;
b). un système pour introduire ce mélange dans une chaudière (9) en tant qu'apport primaire (air primaire) de manière à maintenir le mélange dans la chaudière pendant au moins deux secondes ;
c). un capteur qui sert à mesurer l'oxygène et/ou le monoxyde de carbone et qui est positionné dans la cheminée de décharge des matières brûlées et qui est capable d'ajuster la proportion entre l'air externe et les fumées de bitume dans le mélange.

2. Installation selon la revendication 1, dans laquelle la chaudière est pourvue d'un système d'apport en air toroïdal qui est positionné à l'extérieur de la chambre de combustion et en communication directe avec celle-ci selon une relation axiale avec la flamme.

3. Installation selon la revendication 2, dans laquelle le système toroïdal achemine de l'air d'apport primaire et/ou secondaire dans la chambre de combustion de la chaudière.

4. Installation selon la revendication 3, dans laquelle l'apport primaire est constitué par le mélange obtenu à l'étape a) et l'air secondaire est constitué par de l'air externe, ou par le mélange obtenu à l'étape a).

5. Installation selon l'une quelconque des revendications 1 à 4, dans laquelle le capteur c) est positionné dans la cheminée d'admission des matières brûlées.

6. Installation selon l'une quelconque des revendications 1 à 5, dans laquelle il y a un système de filtrage pour ces fumées de bitume avant qu'elles ne soient mélangées à de l'air externe.

7. Installation selon la revendication 6, dans laquelle le système de filtrage comprend un ou plusieurs filtres de coagulation.

8. Installation selon l'une quelconque des revendications 1 à 7, dans laquelle le système d'admission a) comprend un ou plusieurs ventilateurs ou aspirateurs dotés d'une tête haute.

9. Procédé de réduction de fumées de bitume comprenant :
a). le mélange des fumées de bitume avec de l'air externe (air ambiant) afin de produire un mélange d'air externe/fumées de bitume ;
b). l'introduction de ce mélange dans une chaudière en tant qu'apport primaire (air primaire), ou en tant qu'air secondaire, ou en tant qu'air primaire et secondaire ;
c). le maintien de ce mélange dans la chaudière pendant au moins deux secondes afin de produire des matières brûlées de ce mélange ;
d). la mesure de la teneur en oxygène et/ou en monoxyde de carbone dans les matières brûlées ;
e). l'établissement de la proportion entre les fumées de bitume et l'air externe conformément à la teneur en oxygène et/ou en monoxyde de carbone dans les matières brûlées ;
f). la régulation de la proportion e) de manière à maintenir la relation optimale entre le combustible et le comburant dans la chaudière.
